# EUROPEAN PATENT SPECIFICATION

(11) **EP 0 630 163 B1**
(45) Date of publication and mention of the grant of the patent: **17.05.2000**
(21) Application number: 94103343.3
(22) Date of filing: 05.03.1994
(51) Int. Cl.: H04Q 7/20, H04L 12/28, H04L 12/56

(54) **Improvements in or relating to cellular mobile radio systems**
Verbesserungen an zellular mobilen Funksystemen und diese betreffend
Améliorations relatives aux systèmes radio mobile cellulaires

(30) Priority: 17.06.1993 GB 9312535
(43) Date of publication of application: 21.12.1994
(73) Proprietor: ROKE MANOR RESEARCH LIMITED, Romsey, Hampshire, SO51 0ZN (GB)
(72) Inventor: DeVille, Jonathan Mark, Bournemouth, Dorset BH1 4DR (GB)
(74) Representative: Allen, Derek

(56) References cited:
- GB-A- 2 250 665
- IEEE TRANSACTIONS ON VEHICULAR TECHNOLOGY, vol. 42, no.1, February 1993 NEW YORK US, pages 78-86, XP 000363402 FRULLONE ET AL. 'On the Performance of Packet Reservation Multiple Access with Fixed and Dynamic Channel Allocation'
- IEEE INTERNATIONAL CONFERENCE ON COMMUNICATIONS '93, vol. 1, 23 May 1993 - 26 May 1993 GENEVA CH, pages 172-176, XP 000371088 WONG ET AL. 'Integrated data and speech transmission using packet reservation multiple access'
- IEEE INTERNATIONAL CONFERENCE ON COMMUNICATIONS '93, vol. 2, 23 May 1993 - 26 June 1993 GENEVA CH, pages 1010-1016, XP 000371230 SUZUKI ET AL. 'A CONTENTION-BASED RESERVATION PROTOCOL USING A TDD CHANNEL FOR WIRELESS LOCAL AREA NETWORKS: A PERFORMANCE ANALYSIS'

## Description

This invention relates to cellular mobile radio systems and more especially, although not exclusively, it relates to an improvement in or modification of a cellular mobile radio system arranged to operate in accordance with the packet reservation multiple access protocol which forms the subject of our co-pending GB Patent Application No 9219824.1.

Although the invention is primarily intended for incorporation in digital cellular mobile radio communication systems, it may also find application in wireless local area networks.

According to our co-pending patent application, a cellular mobile radio system is provided which is arranged to operate in accordance with a packet reservation multiple access protocol, where at least one time slot in each frame is designated for the transmission of access contention data which includes a field reserved for data specifying a number of information slots required by a mobile unit, and which system includes a base station adapted for operation such that consequent upon receipt of data in the said reserved field, the base station is arranged to respond by allocating available slots to satisfy the requirement of the mobile unit.

One important advantage of this system as will be appreciated by those skilled in the art, is that since only one access contention request is required, irrespective of the number of information slots required, the access contention time required to reserve capacity will be minimised or at least substantially reduced as compared with a system in which each individual slot must be contended for. Although the system is an improvement over hitherto known arrangements, in that the access contention time is reduced, the choice of the slots used is made solely by the base station on the basis of availability, with a result that some slots may be less than ideal due, for example, to the level of co-channel interference experienced by the mobile.

It is therefore an object of the present invention to provide an improved system wherein slots are chosen in such a manner as to avoid the selection of those slots wherein communication quality is likely to be less than ideal.

According to the present invention we provide a radio system which is arranged to operate in accordance with a packet reservation multiple access protocol, wherein at least one time slot in each frame is designated for the transmission of access contention data, which time slot includes a field reserved for data specifying preferred information slots required by a sub-unit, and which system includes a base station adapted for operation such that consequent upon receipt of data in the said reserved field, the base station is arranged to respond by allocating the preferred slots, if available, thereby to satisfy the requirement of the sub-unit, the sub unit being arranged to include monitor means for monitoring in respect of predetermined slots, a parameter in dependence upon which expected communication quality is predictable, and slot selection means effective for selecting the said preferred slots in dependence upon this monitoring operation.

The radio system may be a cellular mobile radio system wherein the sub-unit is a mobile unit.

The predetermined slots will usually be those slots used for the transmission of information.

The parameter measured may be the signal to noise level as indicated by the carrier level to interference level ratio.

A system according to the present invention may be arranged also to include the principle inventive feature of our co-pending patent application number 9312006.1, to which attention is hereby directed, such that slots are re-used if appropriate whereby setting time/data processing economies are effected.

Thus in accordance with this aspect of the present invention the mobile unit may include a memory storage device used to store data appertaining to the information slots used in a previous transmission and a slot transmission timer responsive to the store for re-setting the transmitter so that the same time slots are re-selected for use in the next successive frame consequent upon confirmation from the base station that the slots used in the previous period of transmission activity should be re-used in the next successive frame.

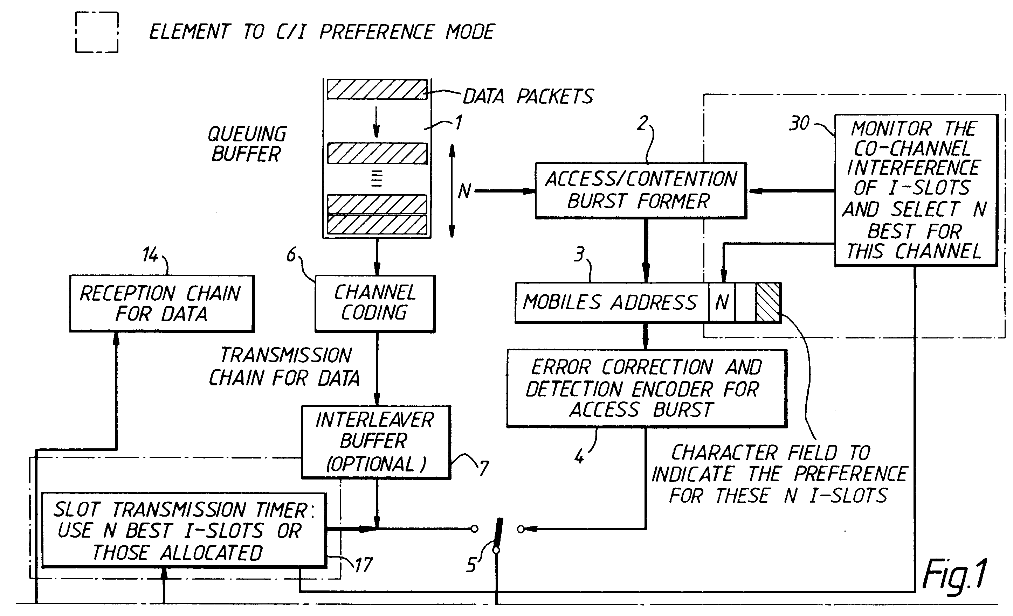

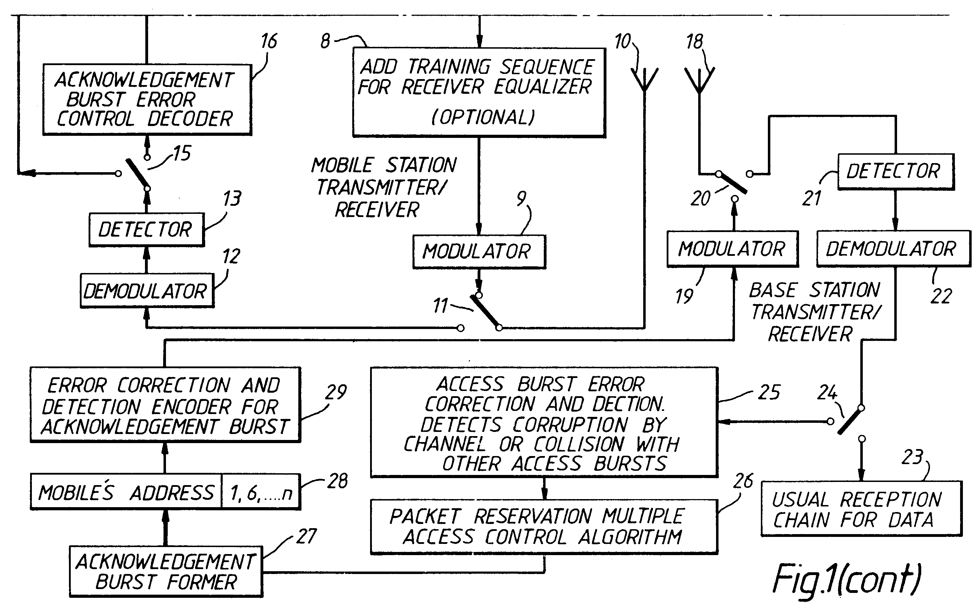

One embodiment of the invention will be described by way of example only with reference to the accompanying drawing, which corresponds substantially to Figure 5 of our co-pending GB patent application number 9219824.1 as referred to above, with the exception that an interference monitor has been included and a slot allocator is associated with the slot transmission timer shown therein, whereby implementation of the present invention is facilitated.

Referring now to the drawing, one arrangement of a mobile and base station for putting the invention into effect will now be described.

Referring firstly to the mobile station, the transmitter comprises a queuing buffer store 1 in which data for transmission is accumulated. The contents of the buffer is sensed by an access contention burst former 2 which determines the number of packets of data to be transmitted in a TDMA frame. Data appertaining to this number, together with the address of the mobile is fed via an address module 3 to an error correction and detection encoder 4 to a switch 5. The switch 5 is also fed from the queuing buffer 1 via a channel coding unit 6 and an interleaver buffer 7. The switch 5 is arranged to feed a training sequence adder 8 and a modulator 9 which in turn feeds an aerial 10 via a transmit/receive switch 11. It will be appreciated that the switch 5 is operated so that the interleaver buffer 7 is connected to the training sequence adder 8 for the transmission of data during an appropriate time slot or so that the error correction and detection decoder 4 is connected to the training sequence adder 8 for the transmission of access contention data appertaining to the number of packets of information to be transmitted. Received signals at the mobile station are fed via the switch 11 to a demodulator 12 which feeds the detector 13. The detector 13 either feeds a data reception chain 14 via a switch 15, or an acknowledgement burst error control decoder unit 16 and a slot transmission timer 17 which serve to identify available slots during which data packets in the queuing buffer 1 should be transmitted.

The base station comprises a transmit/receive aerial 18 fed for transmission purposes from a modulator 19. Signals received at the aerial 18 are fed via a detector 21 and a demodulator 22 to a data reception chain 23 via a switch 24. The switch 24 is arranged to feed the data reception chain 23 for data reception purposes or an access burst error correction and detection unit 25 when access-contention request data is received. The access burst error correction and detection unit 25 feeds a packet reservation multiple access control algorithm unit 26 which analyses each access contention request and serves to provide data appertaining to available time slots, which data is fed via an acknowledgement burst former 27 to an address unit 28 which serves to add the mobile's address to the data and an error correction and detection decoder 29 for the acknowledgement burst. The modulator 19 is fed conventionally with data during appropriate transmission slots and from the error correction and detection decoder 29 for the transmission of acknowledgement signals and data appertaining to slots in which a mobile should transmit.

In order to implement the present invention the slot transmission timer 17 is arranged to include a slot allocator responsive to a monitor 30 which serves to monitor the carrier/co-channel interference ratio in respect of each slot so that the best information (I-slots) slots can be allocated. The slot transmission timer then sets up the transmitter/transport layer to transmit in the preferred time slots.

As shown in the drawing, in order to implement the present invention, a modified air-interface channel identifier (ACI) burst is used in the address module 3 which in effect serves to request the time slots preferred rather than the number of time slots required. In operation of the system if these slots are still available the mobile is assigned the preferred slots.

As hereinbefore mentioned the present invention may be combined with the inventive feature which forms the subject of our co-pending patent application number 9312006.1 whereby the slot transmission timer 17 is arranged to set up the transmitter/transport layer to transmit in the same time slots as were assigned during the previous period of activity. The access contention process is arranged thereafter to continue as usual. If a reply is received from the base station nominating use of the same information slots, the transport chain in the transmitter is already set up and so can commence the next transmission without further delay. If however the I-slots are different to those which were previously selected the transport chain is re-set for these new I-slots which are then entered into the memory which forms part of the slot transmission timer 17 for use if appropriate during the next activity period. In order to facilitate the inclusion of this additional feature an activity detector is required as fully described in our co-pending GB patent application number 9312006.1 which activity detector is used to inform the slot transmission timer that activity has occurred on the channel in question. The slot transmission timer 17 then sets up the transmitter transport layer to transmit in the same slots as were assigned during the previous period of activity.

The process just before described, whereby preparation for re-use of the same slots is effected, is preferable performed also in the base station wherein the receiver chain is prepared in advance and so expects to receive transmission bursts in a given time slot or slots.

It will be appreciated that the unit 30 is a device which serves to monitor the co-channel interference in all of the I-slots in a TDMA frame. From this it generates a list of preferred channels on which the co-channel interference is lowest. For the case in which the same or a similar quantity of transmission capacity is required in order to transmit in each period of activity, the number of I-slots required will be known before the activity period occurs. Once a period of activity actually occurs, the ACI in the address module 3 is arranged to include a field in which the preferred I-slots are loaded and an additional field which serves to indicate this to the base station. After this the ACI is broadcast as hereinbefore described, the slot allocator unit 30 being used to set the transmission timer 17 to receive on these preferred slots thus pre-empting the slot allocation process and saving time in the transmission process.

## Claims

1. A radio system which is arranged to operate in accordance with a packet reservation multiple access protocol, wherein at least one time slot in each frame is designated for the transmission of access contention data, which time slot includes a field reserved for data specifying preferred information slots required by a sub-unit (1-17,30), and which system includes a base station (18-29) adapted for operation such that consequent upon receipt of data in the said reserved field, the base station is arranged to respond by allocating the preferred slots, if available, thereby to satisfy the requirement of the sub-unit (1-17, 30), the system being characterised in that the sub unit is arranged to include monitor means (30) for monitoring in respect of predetermined slots, a parameter in dependence upon which expected communication quality is predictable, and slot selection means (30) effective for selecting the said preferred slots in dependence upon this monitoring operation.

2. A radio system as claimed in Claim 1 which is a cellular mobile radio system wherein the sub-unit (1-17, 30) is a mobile unit.

3. A system as claimed in Claim 1 and Claim 2, wherein the predetermined slots are those slots used for the transmission of information.

4. A system as claimed in any preceding claim, wherein the parameter measured is the signal to noise level as indicated by the carrier level to interference level ratio.

5. A system as claimed in any preceding claim, wherein the mobile unit (1-17, 30) includes a memory storage device used to store data appertaining to the information slots used in a previous transmission and a slot transmission timer (17) responsive to the store for re-setting the transmitter so that the same tune slots are re-selected for use in the next successive frame consequent upon confirmation from the base station (18-29) that the slots used in the previous period of transmission activity should be re-used in the next successive frame.

6. A system as claimed in Claim 5, wherein preparation for the same slots to be re-used is performed also in the base station (18-29) wherein the receiver chain (14) is prepared in advance and so expects to receive transmission bursts in slots used previously.

## Patentansprüche

1. Funksystem, das so beschaffen ist, daß es in Übereinstimmung mit einem Paketreservierungs-Mehrfachzugriff-Protokoll arbeitet, wobei wenigstens ein Zeitschlitz in jedem Rahmen für die Übertragung von Zugriffskonfliktdaten vorgesehen ist, der ein Feld enthält, das für Daten reserviert ist, die bevorzugte Informationsschlitze spezifizieren, die von einer Untereinheit (1-17, 30) gefordert werden, und wobei das System eine Basisstation (18-29) enthält, die für einen Betrieb ausgelegt ist, derart, daß sie infolge des Empfangs von Daten in dem reservierten Feld durch Zuweisen der bevorzugten Schlitze, falls sie verfügbar sind, antwortet, um dadurch die Forderung der Untereinheit (1-17, 30) zu erfüllen, wobei das System dadurch gekennzeichnet ist, daß die Untereinheit so beschaffen ist, daß sie Überwachungsmittel (30), die in bezug auf vorgegebene Schlitze einen Parameter in Abhängigkeit davon überwachen, welche erwartete Kommunikationsqualität vorhersagbar ist, sowie Schlitzwählmittel (30), die die bevorzugten Schlitze in Abhängigkeit von dieser Überwachungsoperation wählen, enthält.

2. Funksystem nach Anspruch 1, das ein Zellen-Mobilfunksystem ist, in dem die Untereinheit (1-17, 30) eine Mobileinheit ist.

3. System nach Anspruch 1 und Anspruch 2, bei dem die vorgegebenen Schlitze jene Schlitze sind, die für die Übertragung von Informationen verwendet werden.

4. System nach irgendeinem vorangehenden Anspruch, wobei der gemessene Parameter der Rauschpegel ist, der durch das Trägerpegel-Störpegel-Verhältnis angegeben wird.

5. System nach irgendeinem vorangehenden Anspruch, bei dem die Mobileinheit (1-17, 30) eine Speichervorrichtung, die dazu verwendet wird, Daten bezüglich der Informationsschlitze zu speichern, die in einer früheren Übertragung verwendet wurden, sowie einen Schlitzübertragungszeitgeber (17) enthält, der als Antwort auf die Speicherung den Sender zurücksetzt, so daß die gleichen Zeitschlitze für die Verwendung in dem nächstfolgenden Rahmen infolge der Bestätigung von der Basisstation (18-29), daß die in der früheren Übertragungsaktivitätsperiode verwendeten Schlitze in dem nächstfolgenden Rahmen erneut verwendet werden sollten, erneut verwendet werden.

6. System nach Anspruch 5, bei dem die Vorbereitung der gleichen Schlitze, die erneut verwendet werden sollen, auch in der Basisstation (18-29) ausgeführt wird, wobei die Empfängerkette (14) im voraus vorbereitet wird und so den Empfang von Übertragungsblöcken in früher verwendeten Schlitzen erwartet.

## Revendications

1. Système radio qui est conçu de manière à fonctionner conformément à un protocole d'accès multiple à réservation de paquets, dans lequel au moins une tranche temporelle au sein de chaque trame est conçue de manière à transmettre des données de contention d'accès, laquelle tranche temporelle inclut un champ réservé à des données spécifiant des tranches d'informations préférées exigées par une sous-unité (1-17, 30), et lequel système inclut une station de base (18-29) adaptée de manière à fonctionner de sorte que, après la réception de données dans ledit champ réservé, la station de base soit conçue de manière à répondre en affectant les tranches préférées, si disponibles, pour satisfaire ainsi aux exigences de la sous-unité (1-17, 30), le système étant caractérisé en ce que la sous-unité est conçue de manière à inclure des moyens de surveillance (30) pour surveiller par rapport à des tranches prédéterminées un paramètre en fonction duquel une qualité de communication attendue est prévisible, et des moyens de sélection de tranche (30) permettant de sélectionner lesdites tranches préférées en fonction de cette opération de surveillance.

2. Système radio selon la revendication 1, qui est un système radio mobile cellulaire dans lequel la sous-unité (1-17, 30) est une unité mobile.

3. Système selon la revendication 1 et la revendication 2, dans lequel les tranches prédéterminées sont les tranches utilisées pour la transmission d'informations.

4. Système selon l'une quelconque des revendications précédentes, dans lequel le paramètre mesuré et le rapport signal sur bruit, tel qu'indiqué par le rapport du niveau de la porteuse sur le niveau d'interférence.

5. Système selon l'une quelconque des revendications précédentes, dans lequel l'unité mobile (1-17, 30) inclut un dispositif de stockage en mémoire utilisé pour stocker des données relatives aux tranches d'informations utilisées au cours d'une transmission précédente et un temporisateur de transmission de tranche (17) sensible au stockage pour réinitialiser l'émetteur de sorte que les mêmes tranches temporelles soient reselectionnées afin d'être utilisées au cours de la trame successive suivante après la confirmation par la station de base (18-29) que les tranches utilisées au cours de la période précédente d'activité de transmission doivent être réutilisées au cours de la trame successive suivante.

6. Système selon la revendication 5, dans lequel la préparation des mêmes tranches à réutiliser est effectuée aussi dans la station de base (18-29), dans lequel la chaîne de réception (14) est préparée à l'avance et s'attend ainsi à recevoir les salves de transmission dans les tranches utilisées précédemment.
